# FASCICULE DE BREVET EUROPEEN

(11) **EP 2 783 443 B1**
(45) Date de publication et mention de la délivrance du brevet: **13.01.2016**
(21) Numéro de dépôt: 12790901.8
(22) Date de dépôt: 22.11.2012
(51) Int. Cl.: H02J 1/10, H02M 3/158

(54) **SYSTÈME D'ALIMENTATION CONTINUE SÉCURISÉE ET RÉGULÉE À ENTRÉES MULTIPLES**
GESICHERTES UND GEREGELTES KONTINUIERLICHES STROMVERSORGUNGSSYSTEM MIT MEHREREN EINGÄNGEN
SECURED AND REGULATED CONTINUOUS POWER SUPPLY SYSTEM WITH MULTIPLE INPUTS

(30) Priorité: 22.11.2011 FR 1103546
(43) Date de publication de la demande: 01.10.2014
(73) Titulaire: THALES, 92200 Neuilly-sur-Seine (FR)
(72) Inventeur: BOGDANIK, Philippe Marc Antoine, F-26027 Valence Cedex (FR); COSTES, David, F-26027 Valence Cedex (FR); MOLLOV, Stefan, F-26027 Valence Cedex (FR)
(74) Mandataire: Blot, Philippe Robert Emile
(86) Numéro de dépôt international: PCT/EP2012/073402
(87) Numéro de publication internationale: WO 2013/076214

(56) Documents cités:
- WO-A2-2008/025490
- JP-A- 59 214 926
- US-A1- 2004 095 021
- US-A1- 2007 018 502

## Description

La présente invention concerne un système d'alimentation continue sécurisée et régulée à entrées multiples.

Plus particulièrement, l'invention concerne un système d'alimentation continue propre à délivrer une tension de sortie et propre à être raccordé en entrée à N réseaux d'alimentation continue distincts et raccordés à un même potentiel de masse, N étant un entier supérieur ou égal à 2, les réseaux d'alimentation fournissant chacun une tension d'entrée, du type comportant des moyens de commutation/sélection de l'un des réseaux d'alimentation, des moyens de régulation de la tension de sortie à partir des tensions d'entrée délivrées par les réseaux d'alimentation, et un organe de contrôle pour le contrôle des moyens de commutation/sélection de l'un des réseaux d'alimentation et des moyens de régulation de la tension de sortie.

Le domaine de l'invention se situe dans les alimentations électriques à partir de réseaux d'alimentation continue distincts. De tels systèmes d'alimentation sont raccordés en entrée à plusieurs de ces réseaux d'alimentation et sont propres à commuter d'un réseau d'alimentation à un autre, par exemple lorsque la tension d'un réseau prioritaire ne permet plus d'alimenter correctement l'équipement et que l'utilisation d'un réseau de secours devient nécessaire.

Ce type de système d'alimentation est couramment utilisé en aéronautique, notamment pour alimenter les équipements électroniques indispensables au fonctionnement des aéronefs.

Dès lors, on conçoit que ces alimentations électriques sont sujettes à un certain nombre de contraintes. Elles doivent ainsi :
- présenter une grande sûreté de fonctionnement, particulièrement pour les applications critiques des aéronefs ;
- présenter une logique de commutation entre les réseaux adaptable et efficace.
- être légères;
- être adaptées à de fortes variations des tensions délivrées par les réseaux d'alimentation se produisant par exemple lors de fonctionnements transitoires de l'aéronef (démarrage ou extinction des moteurs), de pannes dans l'un des réseaux, etc.;
- être peu encombrantes,
- empêcher la propagation des défaillances d'un réseau d'alimentation aux autres réseaux,
- présenter un fort rendement afin de minimiser la taille des dispositifs d'évacuation de la chaleur qu'elles génèrent, et
- avoir une structure compatible avec les exigences d'auto-testabilité présentes en aéronautique.

Plusieurs systèmes d'alimentation obéissant à certaines de ces contraintes sont déjà connus de l'homme du métier.

Un tel système d'alimentation est par exemple décrit dans le document US 2007/0018502 A, qui décrit un montage pour un système d'alimentation continue à entrée duale permettant d'éliminer les pertes énergétiques dues à la fonction de commutation entre les deux réseaux d'alimentation auxquels il est raccordé. Dans ce système, la sélection du réseau d'alimentation est opérée via un circuit de détection qui compare les tensions fournies par les deux réseaux et sélectionne le réseau d'alimentation en fonction du résultat de cette comparaison.

Un autre système d'alimentation de ce type est présenté dans le document US 4 558 230, qui décrit un système d'alimentation à entrée duale capable de commuter de façon sécurisée entre les deux réseaux d'alimentation.

Toutefois, ces solutions ne donnent pas entière satisfaction.

En effet, dans le premier document, la logique de commutation entre les réseaux est rigide et obéit à une loi de commande dépendant de la tension des réseaux d'alimentation. En outre, le système décrit ne prévient pas de façon sûre la mise en court-circuit des deux réseaux d'alimentation, ce qui peut avoir de graves répercussions lorsque ce système est intégré à bord d'un aéronef. En effet ce dispositif n'est pas tolérant à la panne simple car si une des diodes vient à casser en court circuit, un réseau peut directement débiter sur l'autre.

Quant au système d'alimentation décrit dans le document US 4 558 230, il duplique intégralement la chaîne de puissance ainsi que la plupart des circuits de commande. Ce dispositif est donc particulièrement encombrant et lourd.

L'un des objectifs de l'invention est donc d'obtenir un système d'alimentation continue sécurisée à entrées multiples délivrant une tension de sortie régulée et présentant un rendement, un poids, un encombrement et une fiabilité optimisés.

A cet effet, l'invention concerne un système d'alimentation caractérisé en ce que les moyens de régulation de la tension de sortie comprennent N convertisseurs abaisseur/élévateur de tension à inductance commune distincts, à chaque réseau d'alimentation étant dédié un convertisseur abaisseur/élévateur de tension à inductance commune donné pour la régulation de la tension de sortie du système d'alimentation à partir de la tension d'entrée délivrée par le réseau d'alimentation correspondant.

Le système d'alimentation selon l'invention peut comprendre l'une ou plusieurs des caractéristiques suivantes, prise(s) isolément ou suivant toute(s) combinaison(s) techniquement possible(s) :
- les moyens de commutation/sélection de l'un des réseaux d'alimentation comprennent N organes commutateurs à semi-conducteurs commandables et N diodes unidirectionnelles, un organe commutateur à semi-conducteurs commandable donné et une diode unidirectionnelle donnée étant associés à la sélection d'un réseau d'alimentation donné ;
- les diodes unidirectionnelles sont respectivement agencées entre la sortie du convertisseur abaisseur/élévateur de tension à inductance commune dédié au réseau d'alimentation à la sélection duquel les diodes unidirectionnelles sont respectivement associées, et la sortie du système d'alimentation, de sorte que ladite commutation/sélection de l'un des réseaux d'alimentation est sécurisée, c'est-à-dire que les échanges d'énergie entre les réseaux d'alimentation sont prévenus ;
- chaque convertisseur abaisseur/élévateur de tension à inductance commune comprend deux organes commutateurs à semi-conducteurs commandables et deux diodes unidirectionnelles, les organes commutateurs à semi-conducteurs commandables et les diodes des moyens de commutation/sélection étant l'un des organes commutateurs à semi-conducteurs commandables et l'une des diodes unidirectionnelles du convertisseur abaisseur/élévateur de tension à inductance commune dédié au réseau d'alimentation à la sélection duquel lesdits organes commutateurs à semi-conducteurs commandables et lesdites sont respectivement associés ;
- l'organe de contrôle est conçu pour piloter ouverts ou fermés les organes commutateurs à semi-conducteurs des moyens de commutation/sélection indépendamment des tensions d'entrée délivrées par les réseaux d'alimentation ;
- l'organe de contrôle comprend un module de surveillance conçu pour diagnostiquer l'unidirectionnalité des diodes unidirectionnelles des moyens de commutation/sélection de l'un des réseaux d'alimentation à partir de la tension de sortie du système d'alimentation ;
- le module de surveillance diagnostique simultanément l'unidirectionnalité des diodes, et ce indépendamment du réseau d'alimentation sélectionné ;
- le système d'alimentation est embarqué à bord d'un aéronef, les réseaux d'alimentation étant respectivement alimentés par une source de tension continue ou par une combinaison de sources de tension continue, les sources de tension continue alimentant les réseaux d'alimentation étant toutes raccordées à un même potentiel de masse ; et
- le système d'alimentation est raccordé en entrée à exactement deux réseaux d'alimentation, N étant alors égal à 2.

L'invention sera mieux comprise à la lecture de la description qui va suivre, donnée uniquement à titre d'exemple, et faite en se référant aux dessins annexés, sur lesquels:
- la Figure 1 est une représentation schématique illustrant un système d'alimentation continue selon un premier mode de réalisation de l'invention ; et
- la Figure 2 est une représentation schématique illustrant un système d'alimentation continue selon un deuxième mode de réalisation de l'invention.

Le système d'alimentation continue sécurisée et régulée à entrées multiples selon l'invention, ci-après « système d'alimentation », est par exemple destiné à équiper un aéronef. Il est destiné à être raccordé en entrée à N réseaux d'alimentation distincts, N étant un nombre entier supérieur ou égal à 2.

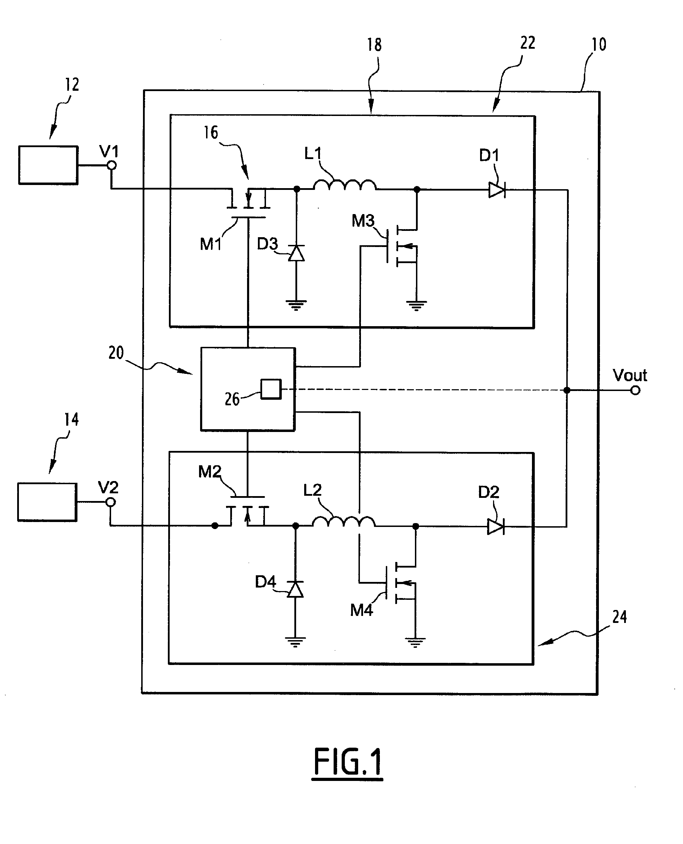

La Figure 1 illustre un mode de réalisation dans lequel ledit système est raccordé en entrée à deux réseaux d'alimentation.

En référence à la Figure 1, le système d'alimentation 10 est raccordé en entrée à deux réseaux d'alimentation 12, 14 distincts. Ces réseaux d'alimentation 12, 14 délivrent des tensions d'entrée respectivement V1 et V2 au système d'alimentation 10.

Le système d'alimentation 10 est alors adapté pour sélectionner l'un des réseaux d'alimentation 12, 14 lui délivrant la tension d'entrée V1, V2 et ne pas utiliser le réseau d'alimentation 12, 14 redondant, ainsi que pour basculer de façon sécurisée du réseau d'alimentation 12, 14 couramment sélectionné vers le réseau redondant.

Il est en outre adapté pour délivrer une tension de sortie Vout régulée à une tension prescrite à partir de la tension d'entrée V1, V2 fournie par le réseau d'alimentation 12, 14 sélectionné.

A cet effet, le système d'alimentation 10 comprend des moyens 16 de commutation/sélection sécurisée de l'un ou l'autre des réseaux d'alimentation 12, 14, et des moyens 18 de régulation de la tension de sortie Vout. En outre, il comprend un organe de contrôle 20 des moyens 16 de commutation/sélection sécurisée de l'un ou l'autre des réseaux d'alimentation 12, 14 et des moyens 18 de régulation de la tension de sortie Vout.

De manière connue, la tension V1 délivrée par le premier réseau d'alimentation 12 est généralement une tension égale à +28V provenant de transformateurs redresseurs alimentés par un alternateur de l'aéronef. La tension V2 délivrée par le second réseau d'alimentation 14 est alors soit délivrée par une batterie de tension nominale +28V, soit est également issue d'un transformateur redresseur alimenté par un alternateur de l'aéronef, soit issue d'une combinaison quelconque de sources de tension continue raccordées à un même potentiel de masse.

De fait, les tensions V1, V2 délivrées par les réseaux d'alimentation 12, 14 présentent une grande dynamique, par exemple du fait de régimes transitoires des moteurs de l'aéronef actionnant les alternateurs, de modes de fonctionnement dégradés des réseaux d'alimentation 12, 14, de reconfigurations, etc.

Dans l'exemple de la Figure 1, les tensions d'entrée V1, V2 varient entre 10 V et 80 V.

Toujours en référence à la Figure 1, les moyens 16 de commutation/sélection sécurisée de l'un ou l'autre des réseaux d'alimentation 12, 14 comprennent deux organes commutateurs à semi-conducteurs commandables M1, M2 raccordés à l'organe de contrôle 20 et deux diodes unidirectionnelles D1, D2.

Les organes commutateurs à semi-conducteurs commandables M1 et M2 sont propres à assurer la commutation entre les réseaux d'alimentation 12, 14. A cet effet, ils sont respectivement associés à la sélection des réseaux d'alimentation 12 et 14 et sont commandés par l'organe de contrôle 20 pour ce faire.

Dans l'exemple de la Figure 1, les organes commutateurs à semi-conducteurs commandables M1, M2 sont de type MOSFET.

Pour la sélection du réseau d'alimentation 12 par le système d'alimentation 10, le MOSFET M2 est commandé ouvert par l'organe de contrôle 20 et le réseau d'alimentation 14 est ainsi inutilisé par le système d'alimentation 10. Le MOSFET M1 peut alors être commandé fermé ou ouvert, comme on le verra par la suite. Le réseau d'alimentation 12 délivre alors la tension d'entrée V1 au système d'alimentation 10.

Inversement, pour la sélection du réseau d'alimentation 14, le MOSFET de référence M1 est commandé ouvert et le réseau d'alimentation 12 n'est pas utilisé pour alimenter le système d'alimentation 10. Le MOSFET de référence M2 peut alors être commandé fermé ou ouvert, comme on le verra par la suite. Le réseau d'alimentation 14 délivre alors la tension d'entrée V2 au système d'alimentation 10.

Les diodes D1, D2 sont propres à sécuriser la commutation entre les réseaux d'alimentation 12, 14, c'est-à-dire à empêcher le transfert d'énergie d'un réseau d'alimentation vers l'autre. Cet évènement peut par exemple se produire en cas de panne simple de l'organe de contrôle 20.

A cet effet, elles sont respectivement associées à l'un et l'autre des réseaux d'alimentation 12, 14 et sont propres à empêcher le transfert d'énergie d'un réseau d'alimentation 12, 14 à l'autre.

Pour ce faire, et comme illustré sur la Figure 1, elles sont unidirectionnelles et sont interposées entre chacun des réseaux d'alimentation 12, 14 et la sortie Vout du système d'alimentation 10. Plus particulièrement, elles sont respectivement disposées entre la sortie d'un convertisseur abaisseur/élévateur de tension associé à chaque réseau d'alimentation 12, 14 et la sortie du système d'alimentation 10, comme on le verra par la suite. Elles n'autorisent alors le passage du courant que depuis le réseau d'alimentation 12, 14 correspondant vers la sortie du système d'alimentation 10.

Ainsi, lorsque le réseau d'alimentation 12 est sélectionné, la diode D1 est passante ou bloquée selon les phases de fonctionnement d'un convertisseur buck-boost décrit ci-dessous et la diode D2 est bloquée de telle sorte que la réinjection d'énergie du réseau d'alimentation 12 vers le réseau 14 est prévenue.

Inversement, lorsque le réseau d'alimentation 14 est sélectionné, la diode D2 est passante ou bloquée selon les phases de fonctionnement d'un convertisseur buck-boost décrit ci-dessous et la diode D1 est bloquée de telle sorte que la réinjection d'énergie du réseau d'alimentation 14 vers le réseau 12 est prévenue.

Les moyens 18 de régulation de la tension de sortie Vout comprennent deux convertisseurs abaisseur/élévateur de tension à inductance commune 22, 24 connus sous le nom anglais de convertisseurs « buck-boost » 22, 24, ci après « convertisseurs buck-boost 22, 24 ».

Chaque convertisseur buck-boost 22, 24 est propre à réguler la tension de sortie Vout du système d'alimentation 10 à une tension prescrite à partir de la tension V1, V2 délivrée par le réseau d'alimentation 12, 14.

De tels convertisseurs sont par exemple décrits dans le document US 6 977 488.

Chaque convertisseur buck-boost 22, 24 comprend au moins deux organes commutateurs à semi-conducteurs commandables, deux redresseurs et une inductance commune. Ces éléments sont répartis en deux branches, une première et une deuxième branches, chaque branche comprenant un organe commutateur et un redresseur en série et étant raccordée à un noeud de l'inductance commune.

Dans le système d'alimentation 10 selon l'invention, un convertisseur buck-boost 22, 24 est dédié à chaque réseau d'alimentation 12, 14. Ceci permet entre autre au système d'alimentation 10 d'accroitre la sûreté de fonctionnement du système, comme on le verra par la suite.

En outre, les composants de puissance réalisant la fonction de commutation/sélection sécurisée du système d'alimentation 10 sont également utilisés pour la fonction de régulation de la tension de sortie Vout à partir de la tension d'entrée V1, V2.

Ainsi, comme illustré sur la Figure 1, les organes commutateurs M1, M2 sont également l'un des deux organes commutateurs à semi-conducteur des convertisseurs buck-boost 22, 24 et sont disposés sur la partie haute de la première branche de leur convertisseur buck-boost respectif. En outre, les diodes D1, D2 sont l'un des deux redresseurs des convertisseurs buck-boost 22, 24 et sont disposées sur la partie haute de la deuxième branche de leur convertisseur buck-boost respectif.

Ainsi, le convertisseur buck-boost de référence 22 associé au réseau d'alimentation de référence 12 comprend l'organe commutateur M1 et la diode D1, ainsi qu'une diode D3, un organe commutateur à semi-conducteurs commandable M3 et une inductance commune L1.

Le convertisseur buck-boost de référence 24 associé au réseau d'alimentation de référence 14 comprend quant à lui l'organe commutateur M2 et la diode D2, ainsi qu'une diode D4, un organe commutateur à semi-conducteurs commandable M4 et une inductance commune L2.

Les diodes D1, D2 sont alors respectivement disposées sur la partie haute des deuxièmes branches de chaque convertisseur buck-boost 22, 24 pour prévenir le transfert d'énergie d'un réseau d'alimentation 12, 14 à l'autre réseau, comme décrit ci-dessus.

Les parties inférieures des deux branches de chaque convertisseur buck-boost 22, 24 sont raccordées à un même potentiel de masse.

Dans l'exemple de la Figure 1, les organes commutateurs à semi-conducteurs commandables M2 et M4 sont également de type MOSFET.

Les sorties des convertisseurs buck-boost 22, 24 sont également raccordées entre elles pour réaliser la tension de sortie Vout du système d'alimentation 10.

L'organe de contrôle 20 est propre à commander les organes commutateurs à semi-conducteurs commandables M1, M2 pour la sélection du réseau d'alimentation 12, 14, comme décrit ci-dessus.

A cet effet, et de manière connue, l'organe de contrôle 20 comprend des circuits de logique séquentielle (non représentés) propres à implémenter une logique de sélection entre les deux réseaux d'alimentation.

Dans le système d'alimentation 10 selon l'invention, la logique de sélection réalise la sélection préférentielle du réseau d'alimentation 12, 14 délivrant une tension d'entrée V1, V2 issue d'un alternateur que comprend l'aéronef lorsque cela est possible, plutôt que la sélection du réseau alimenté par une batterie.

La sélection du réseau d'alimentation 12, 14 est alors indépendante des tensions V1, V2 délivrées par les réseaux d'alimentation 12, 14.

Lorsque l'un des deux réseaux 12, 14 est alimenté par une batterie, ceci permet notamment d'éviter de décharger ladite batterie sans que cela soit nécessaire.

L'organe de contrôle 20 est en outre propre à piloter les moyens 18 de régulation de la tension de sortie Vout à partir de ladite tension Vout et de la tension d'entrée V1, V2.

A cet effet, et de manière connue, l'organe de contrôle 20 comprend un ou plusieurs blocs de commande (non représentés), par exemple à modulation de largeur d'impulsion, pour le pilotage des organes commutateurs M1, M3, M2, M4 des convertisseurs buck-boost 22, 24.

Toujours de manière connue, en fonction de la tension d'entrée V1, V2 et de la tension de sortie Vout du système d'alimentation 10, les organes commutateurs M1, M3, M2, M4 du convertisseur buck-boost 22, 24 du réseau d'alimentation 12, 14 sélectionné sont commandés ouverts et/ou fermés lors de cycles de découpage de telle sorte que la tension de sortie Vout soit sensiblement constante et égale à une tension de sortie prescrite.

L'organe de contrôle 20 est également propre à diagnostiquer l'unidirectionnalité des diodes D1, D2 pour prévenir tout échange d'énergie entre les réseaux d'alimentation 12 et 14.

A cet effet, l'organe de contrôle 20 comprend un module de surveillance 26 raccordé à la sortie du système d'alimentation 10 et propre à diagnostiquer l'état de fonctionnement des diodes D1 et D2 à partir de la tension Vout.

Ainsi, lorsque le réseau d'alimentation 12 est sélectionné, l'organe commutateur M3 est piloté ouvert et/ou fermé par l'organe de contrôle 20 pour la régulation de la tension Vout. Si la diode D1 est défaillante et se trouve en mode court-circuit, la fonction d'élévation de tension du convertisseur buck-boost 22 est inopérante. La tension Vout n'est alors plus régulée correctement et la défaillance de la diode D1 est immédiatement détectée par le module de surveillance 26.

De même, lorsque le réseau d'alimentation 14 est non-utilisé par le système d'alimentation 10, l'organe commutateur M2 est commandé ouvert et l'organe commutateur M4 est commandé fermé. Si la diode D2 est défaillante en mode court-circuit, la tension Vout est court-circuitée à travers la diode D2 et l'organe commutateur M4, ce qui est détecté par le module de surveillance 26.

A l'inverse, si le réseau d'alimentation 14 est utilisé par le système d'alimentation 10, l'organe commutateur M3 est commandé fermé et l'organe commutateur M1 est commandé ouvert. Si la diode D1 est défaillante en court-circuit, la tension Vout délivrée par le système d'alimentation 10 est alors nulle et la défaillance en court-circuit de la diode D1 est immédiatement détectée par le module de surveillance 26. Une défaillance de la diode D2 est détectée de la même manière que précédemment : lorsque celle-ci est en court-circuit, la fonction d'élévation de tension du convertisseur buck-boost 24 est inopérante. La tension Vout n'est alors plus régulée correctement et la défaillance de la diode D2 est immédiatement détectée par le module de surveillance 26.

Ainsi, le module de surveillance 26 diagnostique continuellement l'unidirectionnalité des diodes D1, D2, et ce indépendamment du réseau d'alimentation 12, 14 sélectionné par l'organe de contrôle 20.

Le fonctionnement du système d'alimentation 10 selon l'invention va maintenant être décrit en référence à la Figure 1, dans le cas où le réseau d'alimentation 14 est tout d'abord sélectionné.

Lors du fonctionnement du système d'alimentation 10, le réseau d'alimentation 14 délivre la tension d'entrée V2 au système d'alimentation 10.

Le réseau d'alimentation 12 n'est pas utilisé via la commande du MOSFET M1 en position ouverte par l'organe de contrôle 20.

Les diodes D1, D2 préviennent le transfert d'énergie entre les réseaux d'alimentation 12, 14.

L'unidirectionnalité de ces diodes D1, D2 est diagnostiquée continuellement par le module de surveillance 26 à partir de la tension de sortie Vout et la sélection du réseau d'alimentation 14 est maintenue tant que la logique de sélection de l'organe de contrôle 20 ne commande pas la commutation du réseau d'alimentation 14 vers le réseau d'alimentation redondant 12.

La tension Vout est alors régulée par le convertisseur buck-boost 24 commandé par l'organe de contrôle 20 via le pilotage des MOSFET M2 et M4.

Lorsque la logique de sélection de l'organe de contrôle 20 commande la commutation de l'alimentation du réseau d'alimentation 14 vers le réseau d'alimentation 12, le MOSFET M2 est commandé ouvert et le réseau d'alimentation 14 est alors non utilisé.

Le convertisseur buck-boost 22 devient actif et les MOSFET M1 et M3 sont pilotés par l'organe de contrôle 20 pour réaliser la régulation de la tension de sortie Vout.

Les composants de puissance M1, M2, D1, D2 réalisant la commutation sécurisée entre les réseaux d'alimentation 12, 14 sont également utilisés par les convertisseurs buck-boost 22, 24 pour la régulation de la tension de sortie Vout du système d'alimentation 10.

De fait, la fonction de commutation entre les réseaux d'alimentation 12, 14 n'a aucun impact sur le rendement du système d'alimentation 10 selon l'invention. En effet, de façon générale, la fonction de commutation entre les réseaux d'alimentation est obtenue par mise en série d'un ou plusieurs composants de puissance dédiés à la fonction de commutation/sélection et disposés entre les réseaux d'alimentation et la fonction de régulation de la tension de sortie. Les composants de puissance dissipent alors une partie de l'énergie électrique transitant par eux, ce qui diminue le rendement du système d'alimentation.

En outre, la logique de sélection du réseau d'alimentation 12, 14 est indépendante de la tension d'entrée V1, V2 délivrée par les réseaux d'alimentation. Comme décrit précédemment, ceci permet la sélection préférentielle du réseau d'alimentation alimenté par un alternateur de l'aéronef plutôt que par une batterie, ce qui augmente la durée d'utilisation de celle-ci.

Par ailleurs, chaque branche de chaque convertisseur buck-boost 22, 24 comprend deux composants de puissance en série. Dès lors, le système d'alimentation 10 est tolérant à la panne simple de l'un de ces composants de puissance pour l'événement redouté qui est le transfert de puissance entre les deux réseaux d'alimentation. Le dysfonctionnement des organes commutateurs M1 et M2 n'ayant pas d'impact sur cet événement redouté, le dysfonctionnement des diodes D1 et D2 en court-circuit est surveillé de façon continue par le module de surveillance 26. L'organe de contrôle 20 commande alors l'ouverture des organes commutateurs M1 et M2 en cas de détection de la défaillance respectivement des diodes D1 et D2.

De même, les redresseurs utilisés dans la partie supérieure des deuxièmes branches des convertisseurs buck-boost 22, 24 étant des diodes unidirectionnelles et non des commutateurs, le système d'alimentation 10 est rendu tolérant à la panne simple de l'organe de contrôle 20, le transfert d'énergie entre les réseaux d'alimentation 12, 14 étant prévenu. Ceci est vrai quelque soit le mode de panne de l'organe de contrôle 20 : par exemple une panne se traduisant par des commandes intempestives des organes commutateurs, une absence de commande desdits organes, etc.

La fiabilité, la sûreté de fonctionnement et le rendement du système d'alimentation selon l'invention sont ainsi simultanément optimisés.

En outre, ces différents gains ne se traduisent que par une faible augmentation de l'encombrement du système d'alimentation 10, dans la mesure où la topologie du système d'alimentation implique la duplication de composants de puissance sur une inductance (l'inductance commune L1, L2 des convertisseurs buck-boost 22, 24), à l'inverse de nombreuses topologies connues de l'homme du métier qui impliquent la duplication intégrale des transformateurs associés à ce type de système d'alimentation, ce qui constitue une augmentation de complexité, de volume et de coût significative.

Simultanément, le système d'alimentation 10 selon l'invention s'affranchit de tout élément électromécanique pour la commutation entre les réseaux d'alimentation 12, 14 et/ou la régulation de la tension de sortie Vout, de tels composants pouvant significativement diminuer la durée de vie d'un tel système d'alimentation.

Enfin, la tension de sortie Vout délivrée par le système d'alimentation 10 selon l'invention étant régulée via les convertisseurs buck-boost 22, 24, le système d'alimentation 10 est particulièrement adapté pour être disposé en amont d'un transformateur, par exemple lorsqu'une isolation galvanique est requise dans l'équipement électronique. En effet, le rendement d'un transformateur est dépendant de la qualité de la régulation de la tension qui lui est délivrée en entrée. Le système d'alimentation 10 selon l'invention délivrant une tension Vout régulée via ses moyens 18 de régulation, il permet ainsi d'obtenir un rendement des dispositifs de conversion d'énergie en aval significativement amélioré par rapport à de nombreuses topologies connues de l'homme du métier. Les dispositifs d'évacuation de la chaleur générée par le transformateur peuvent alors présenter un encombrement réduit.

Dans tout ce qui précède, on a décrit un mode de réalisation dans lequel le système d'alimentation 10 est raccordé en entrée à deux réseaux d'alimentation 12, 14.

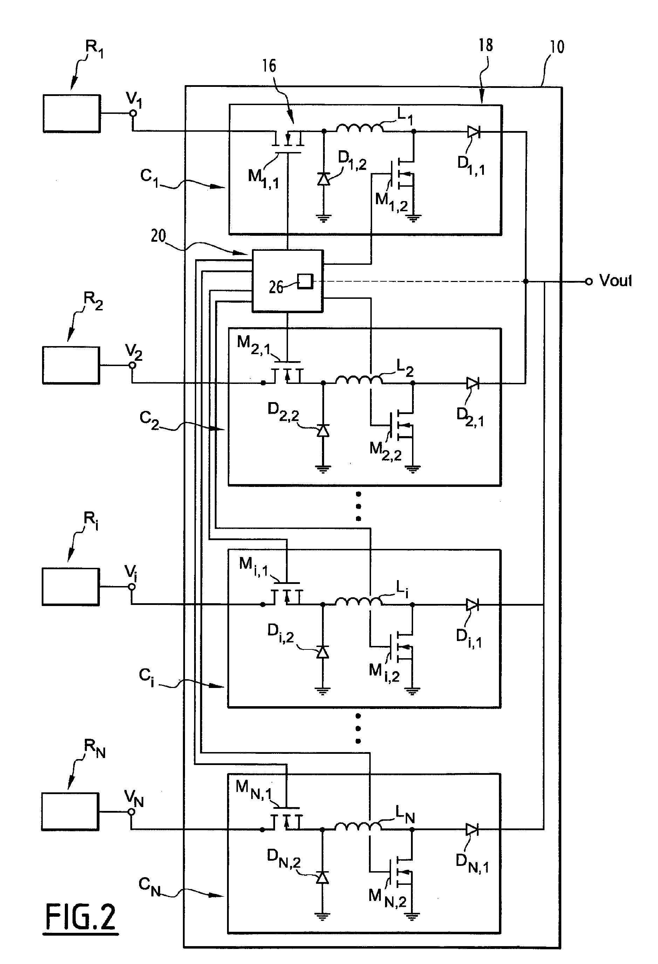

Le mode de réalisation de la Figure 2 correspond au cas général d'un système d'alimentation 10 propre à être raccordé en entrée à N réseaux d'alimentation R₁, ..., R*_{N}* distincts délivrant chacun une tension d'entrée V₁, ..., V*_{N}*, N étant un nombre entier supérieur ou égal à 2, lesdits réseaux d'alimentation étant raccordés à un même potentiel de masse.

Les moyens 16 de commutation/sélection de l'un des réseaux d'alimentation comprennent N organes commutateurs à semi-conducteurs commandables M_{1,1}, ..., M_{*N*,1} et N diodes unidirectionnelles D_{1,1}, ..., D_{*N*,1}, à la sélection d'un réseau d'alimentation R*ᵢ* donné étant associés un organe commutateur à semi-conducteurs commandable M_{*i*,1} donné et une diode unidirectionnelle D_{*i*,1} donnée, i étant un nombre entier compris entre 2 et N.

Dans le mode de réalisation de la Figure 2, à chaque réseau d'alimentation R*ᵢ* est dédié un convertisseur buck-boost C*ᵢ* donné pour la régulation de la tension de sortie Vout du système d'alimentation 10 à partir de la tension d'entrée V*ᵢ* délivrée par le réseau d'alimentation R*ᵢ* correspondant. Le système d'alimentation 10 comprend ainsi N convertisseurs buck-boost distincts commandés par l'organe de contrôle 20 pour la sélection d'un réseau d'alimentation R₁ ..., R*_{N}* parmi les N réseaux d'alimentation, et ce indépendamment des tensions d'entrée V₁, ..., V*_{N}*, et pour la régulation de la tension de sortie Vout à partir de la tension d'entrée V*ᵢ* délivrée par le réseau d'alimentation R*ᵢ* sélectionné.

Comme décrit précédemment, le convertisseur buck-boost C*ᵢ* associé à un réseau d'alimentation R*ᵢ* donné comprend une inductance commune L*ᵢ*, deux organes commutateurs à semi-conducteurs commandables M_{*i*,1}, M_{*i*,2} et deux diodes unidirectionnelles D_{*i*,1}, D_{*i*,2} disposées respectivement sur une première et une deuxième branches du convertisseur raccordées à l'inductance commune. Chaque branche comporte ainsi deux composants de puissance en série. En outre, chaque branche de chaque convertisseur buck-boost C*ᵢ* est raccordée à l'organe de contrôle 20.

La diode D_{*i*,1} disposée sur la partie supérieure de la deuxième branche du convertisseur buck-boost C*ᵢ* prévient le transfert d'énergie des autres réseaux d'alimentation vers le réseau d'alimentation R*ᵢ* à la sélection duquel ladite diode est associée, de telle sorte que la commutation/sélection d'un réseau d'alimentation R*ᵢ* parmi N réseaux d'alimentation est sécurisée. En plus de sa fonction de conversion d'énergie dans le convertisseur buck-boost C*ᵢ* correspondant, cette diode D_{*i*,1} assure une fonction d'anti-retour.

En outre, l'organe commutateur M_{*i*,1} de la première branche du convertisseur buck-boost C*ᵢ* est également associé à la sélection du réseau d'alimentation R*ᵢ* correspondant par l'organe de contrôle 20.

Pour la sélection du réseau d'alimentation R*ᵢ* par l'organe de contrôle 20 parmi les N réseaux d'alimentation, ledit organe commutateur M_{*i*,1} est commandé fermé ou ouvert par l'organe de contrôle 20 selon les phases de fonctionnement du convertisseur buck-boost C*ᵢ*, et les organes commutateurs M_{*k*,1} des autres convertisseurs buck-boost C*ₖ* sont commandés ouverts par l'organe de contrôle 20, k étant un nombre entier compris entre 2 et N et différent de i.

Lors du basculement du réseau d'alimentation R*ᵢ* vers un autre réseau R*ⱼ* (j compris entre 2 et N, j différent de i), l'organe commutateur de référence M_{*i*,1} est commandé ouvert et l'organe commutateur M_{*j*,1} est commandé ouvert ou fermé selon les phases de fonctionnement du convertisseur buck-boost C*ⱼ*, les organes commutateurs M_{*l*,1} étant maintenus en position ouverte, pour tout I nombre entier compris entre 2 et N et différent de i et j.

Les sorties de tous les convertisseurs buck-boost C₁, ..., C*_{N}* sont raccordées entre elles pour réaliser la tension de sortie Vout.

Par ailleurs, l'unidirectionnalité des diodes D_{1,1}, ..., D_{*N*,1} est diagnostiquée par le module de surveillance 26 à partir de la tension de sortie Vout de même manière que précédemment.

Enfin, les réseaux d'alimentation R₁, ..., R*_{N}* sont respectivement alimentés par une source de tension continue ou par une combinaison de sources de tension continue, les sources de tension continue alimentant les réseaux d'alimentation (12, 14; R₁, ..., R*_{N}*) étant toutes raccordées à un même potentiel de masse.

Bien sûr, d'autres modes de réalisation sont envisageables.

## Revendications

1. Système d'alimentation continue propre à délivrer une tension de sortie (Vout) et propre à être raccordé en entrée à N réseaux d'alimentation continue (12, 14 ; R₁, ..., R*_{N}*) distincts et raccordés à un même potentiel de masse, N étant un entier supérieur ou égal à 2, les réseaux d'alimentation (12, 14 ; R₁, ..., R*_{N}*) fournissant chacun une tension d'entrée (V 1, V2 ; V₁,..., V*_{N}*), du type comportant :
- des moyens (16) de commutation/sélection de l'un des réseaux d'alimentation (12, 14 ; R₁, ..., R*_{N}*),
- des moyens (18) de régulation de la tension de sortie (Vout) à partir des tensions d'entrée (V1, V2 ; V₁,..., V*_{N}*) délivrées par les réseaux d'alimentation (12, 14 ; R₁, ..., R*_{N}*), et
- un organe de contrôle (20) pour le contrôle des moyens (16) de commutation/sélection de l'un des réseaux d'alimentation (12, 14 ; R₁, ..., R*_{N}*) et des moyens (18) de régulation de la tension de sortie (Vout),
**caractérisé en ce que** les moyens (18) de régulation de la tension de sortie (Vout) comprennent N convertisseurs abaisseur/élévateur de tension à inductance commune (22, 24 ; C₁, ..., C*_{N}*) distincts, à chaque réseau d'alimentation (12, 14 ; R₁, ..., R*_{N}*) étant dédié un convertisseur abaisseur/élévateur de tension à inductance commune (22, 24 ; C₁, ..., C*_{N}*) donné pour la régulation de la tension de sortie Vout du système d'alimentation (10) à partir de la tension d'entrée (V1, V2 ; V₁,..., V*_{N}*) délivrée par le réseau d'alimentation (12, 14 ; R₁, ..., R*_{N}*) correspondant.

2. Système d'alimentation selon la revendication 1, **caractérisé en ce que** les moyens (16) de commutation/sélection de l'un des réseaux d'alimentation (12, 14 ; R₁, ..., R*_{N}*) comprennent N organes commutateurs à semi-conducteurs commandables (M1, M2 ; M_{1,1} ..., M_{*N*,1}) et N diodes unidirectionnelles (D1, D2 ; D_{1,1}, ..., D_{*N*,1}), un organe commutateur à semi-conducteurs commandable (M1, M2 ; M_{1,1}, ..., M_{*N*,1}) donné et une diode unidirectionnelle (D1, D2 ; D_{1,1}, ..., D_{*N*,1}) donnée étant associés à la sélection d'un réseau d'alimentation (12, 14 ; R₁, ..., R*_{N}*) donné.

3. Système d'alimentation selon la revendication 2, **caractérisé en ce que** les diodes unidirectionnelles (D1, D2 ; D_{1,1}, ..., D_{*N*,1}) sont respectivement agencées entre la sortie du convertisseur abaisseur/élévateur de tension à inductance commune (22, 24 ; C₁, ..., C*_{N}*) dédié au réseau d'alimentation (12, 14 ; R₁, ..., R*_{N}*) à la sélection duquel les diodes unidirectionnelles (D1, D2 ; D_{1,1}, ..., D_{*N,*1}) sont respectivement associées, et la sortie du système d'alimentation (10), de sorte que ladite commutation/sélection de l'un des réseaux d'alimentation (12, 14; R₁, ..., R*_{N}*) est sécurisée, c'est-à-dire que les échanges d'énergie entre les réseaux d'alimentation (12, 14 ; R₁, ..., R*_{N}*) sont prévenus.

4. Système d'alimentation selon la revendication 2 ou 3, **caractérisé en ce que** chaque convertisseur abaisseur/élévateur de tension à inductance commune (22, 24 ; C₁, ..., C*_{N}*) comprend deux organes commutateurs à semi-conducteurs commandables (M1, M3, M2, M4 ; M_{1,1}, M_{1,2}, ..., M_{*N*,*1*} M_{*N*,2}) et deux diodes unidirectionnelles (D1, D3, D2, D4; D_{1,1} D_{1,2}, ..., D_{*N*,1}, D_{*N*,2}), les organes commutateurs à semi-conducteurs commandables (M1, M2 ; M_{1,1}, ..., M_{*N,*1}) et les diodes (D1, D2 ; D_{1,1}, ..., D_{*N,*1}) des moyens (16) de commutation/sélection étant l'un des organes commutateurs à semi-conducteurs commandables et l'une des diodes unidirectionnelles du convertisseur abaisseur/élévateur de tension à inductance commune (22, 24 ; C₁, ..., C*_{N}*) dédié au réseau d'alimentation (12, 14; R₁, ..., R*_{N}* à la sélection duquel lesdits organes commutateurs à semi-conducteurs commandables (M1, M2 ; M_{1,1}, ..., M_{*N*,1}) et lesdites diodes (D1, D2 ; D_{1,1}, ..., D_{*N*,1}) sont respectivement associés.

5. Système d'alimentation selon l'une quelconque des revendications précédentes, caractérisé en ce l'organe de contrôle (20) est conçu pour piloter ouverts ou fermés les organes commutateurs à semi-conducteurs (M1, M2; M_{1,1}, ..., M_{*N*,1}) des moyens (16) de commutation/sélection indépendamment des tensions d'entrée (V1, V2 ; V₁, ..., V*_{N}*) délivrées par les réseaux d'alimentation (12, 14 ; R₁, ..., R*_{N}*).

6. Système d'alimentation selon l'une quelconque des revendications précédentes, **caractérisé en ce que** l'organe de contrôle (20) comprend un module de surveillance (26) conçu pour diagnostiquer l'unidirectionnalité des diodes unidirectionnelles (D1, D2 ; D_{1,1}, ..., D_{*N*,1}) des moyens (16) de commutation/sélection de l'un des réseaux d'alimentation (12, 14 ; R₁ ..., R*_{N}*) à partir de la tension de sortie (Vout) du système d'alimentation (10).

7. Système d'alimentation selon la revendication 6, **caractérisé en ce que** le module de surveillance (26) diagnostique simultanément l'unidirectionnalité des diodes (D1, D2 ; D_{1,1}, ..., D_{*N*,1}), et ce indépendamment du réseau d'alimentation (12, 14 ; R₁, ..., R*_{N}*) sélectionné.

8. Système d'alimentation selon l'une quelconque des revendications précédentes, **caractérisée en ce qu'**il est embarqué à bord d'un aéronef, les réseaux d'alimentation (12, 14 ; R₁, ..., R*_{N}*) étant respectivement alimentés par une source de tension continue ou par une combinaison de sources de tension continue, les sources de tension continue alimentant les réseaux d'alimentation (12, 14 ; R₁, ..., R*_{N}*) étant toutes raccordées à un même potentiel de masse.

9. Système d'alimentation selon l'une quelconque des revendications précédentes, **caractérisé en ce qu'**il est raccordé en entrée à exactement deux réseaux d'alimentation (12, 14), N étant alors égal à 2.

## Patentansprüche

1. Gleichstroms-Versorgungsystem, welches eine Ausgangsspannung (Vout) liefern kann und an N Einganasgleichstromversorgungsnetze (12, 14; R₁, ..., R*_{N}*) angeschlossen sein kann, welche getrennt und mit demselben Massepotential verbunden sind, wobei N eine ganze Zahl größer als oder gleich 2 ist, wobei die Versorgungsnetze (12, 14; R₁, ..., R*_{N}*) jeweils eine Eingangsspannung (V1, V2; V₁, ..., V*_{N}*) liefern, der Art, aufweisend:
- Mittel (16) zur Schaltung / Auswahl eines der Versorgungsnetze (12, 14; R₁, ..., R*_{N}*),
- Mittel (18) zur Regulierung der Ausgangsspannung (Vout) ausgehend von Eingangsspannungen (V1, V2, V₁, ..., V*_{N}*), welche von den Stromversorgungsnetzen (12, 14; R₁, ..., R*_{N}*) geliefert werden, und
- ein Kontrollorgan (20) zur Kontrolle der Mittel (16) zur Schaltung / Auswahl eines der Versorgungsnetze (12, 14; R₁, ..., R*_{N}*) und Mittel (18) zur Regulierung der Ausgangsspannung (Vout),
**dadurch gekennzeichnet, dass** die Mittel (18) zur Regulierung der Ausgangsspannung (Vout) N getrennte Abwärts- / Aufwärtsspannungswandler mit gemeinsamer Induktivität (22, 24; C₁, ..., C*_{N}*) aufweisen, wobei jedem Versorgungsnetz (12, 14; R₁, .... R*_{N}*) ein gegebener Abwärts- / Aufwärtsspannungswandler mit gemeinsamer Induktivität (22, 24; C₁, ..., C*_{N}*) zur Regulierung der Ausgangsspannung Vout des Versorgungssystems (10) ausgehend von der Eingangsspannung (V1, V2; V₁, ..., V*_{N}*), welche von dem entsprechenden Versorgungsnetz (12, 14; R₁, ..., R*_{N}*) geliefert wird, gewidmet ist.

2. Versorgungsystem nach Anspruch 1, **dadurch gekennzeichnet, dass** die Mittel (16) zur Schaltung / Auswahl eines der Versorgungsnetze (12, 14; R₁, ..., R*_{N}*) N steuerbare Halbleiterschaltorgane (M1, M2; M_{1,1},..., M_{*N*,1}) und N unidirektionale Dioden (D1, D2; D_{1,1},..., D_{*N*,1}) aufweisen, wobei ein gegebenes steuerbares Halbleiterschaltorgan (M1, M2; M_{1,1},..., M_{*N*,1}) und eine gegebene unidirektionale Diode (D1, D2; D_{1,1},..., D_{*N*,1}) der Auswahl eines gegebenen Versorgungsnetzes (12, 14; R₁, ..., *R_{N}*) zugeordnet sind.

3. Versorgungsystem nach Anspruch 2, **dadurch gekennzeichnet, dass** die unidirektionalen Dioden (D1, D2; D_{1,1},..., *D*_{*N*,1}) jeweils zwischen dem Ausgang des Abwärts- / Aufwärtsspannungswandlers mit gemeinsamer Induktivität (22, 24; C₁, ..., *C_{N}*), welcher dem Versorgungsnetz (12, 14; R₁, ..., R*_{N}*) gewidmet ist, deren Auswahl die unidirektionalen Dioden (D1, D2; D_{1,1},..., D_{*N*,1}) jeweils angeordnet sind, und dem Ausgang des Versorgungssystems (10) eingerichtet sind, so dass die Schaltung / Auswahl eines der Versorgungsnetze (12, 14; R₁, ..., R*_{N}*) gesichert ist, d.h. dem Austausch von Energie zwischen den Versorgungsnetzen (12, 14; R₁, ..., R*_{N}*) vorgebeugt wird.

4. Versorgungssystem nach Anspruch 2 oder 3, **dadurch gekennzeichnet, dass** jeder Abwärts- / Aufwärtsspannungswandler mit gemeinsamer Induktivität (22, 24; C₁, ..., C*_{N}*) zwei steuerbare Halbleiterschaltorgan (M1, M3, M2, M4; M_{1,1}, M_{1,2}, ..., M_{*N*,1}, M_{*N*,2}) und zwei unidirektionale Dioden (D1, D3, D2, D4; D_{1,1}, D_{1,2}, .... D_{*N*,1}, D_{*N*,2}) aufweist, wobei die Steuerbare Halbleiterschaltorgan (M1, M2; M_{1,1}, ..., M_{*N*,1}) und die Dioden (D1, D2; D_{1,1},..., D_{*N*,1}) der Mittel (16) zur Schaltung / Auswahl eines der steuerbaren Halbleiterschaltorgane und eine der unidirektionalen Dioden des Abwärts- / Aufwärtsspannungswandlers mit gemeinsamer Induktivität (M1, M2; M_{1,1},..., M_{N,1}) sind, welcher dem Versorgungsnetz gewidmet ist, und deren Auswahl die steuerbaren Halbleiterschaltorgane (M1, M2; M_{1,1},..., M_{*N*,1}) und die Dioden (D1, D2; D_{1,1},..., D_{*N*,1}) jeweils zugeordnet sind.

5. Versorgungssystem nach einem der vorhergehenden Ansprüche, **dadurch gekennzeichnet, dass** das Kontrollorgan (20) derart eingerichtet ist, die steuerbaren Halbleiterschaltorgane (M1, M2; M_{1,1},..., M_{*N*,1}) der Mittel (16) zur Schaltung / Auswahl unabhängig von den Eingangsspannungen (V1, V2; V₁, ..., V_{N}) offen oder geschlossen zu steuern, welche von den Versorgungsnetzen (12, 14; R₁, ..., R*_{N}*) geliefert werden.

6. Versorgungsystem nach einem der vorhergehenden Ansprüche, **dadurch gekennzeichnet, dass** das Kontrollorgan (20) ein Modul zur überwachung (26) aufweist, welches eingerichtet ist, die Unidirektionalität der unidirektionalen Dioden (D1, D2; D_{1,1},..., D_{*N*,1}) der Mittel (16) zur Schaltung / Auswahl eines der Versorgungsnetze (12, 14; R₁, ..., R*_{N}*) aus der Ausgangspannung (Vout) des Versoraungssystems (10) zu ermitteln.

7. Versorgungssystem nach Anspruch 6, **dadurch gekennzeichnet, dass** das Modul zur Überwachung (26) gleichzeitig die Unidirektionalität der Dioden (D1, D2; D_{1,1},..., D_{*N*,1}) ermitteln, und dies unabhängig von dem ausgewählten Versorgungsnetz (12, 14; R₁, ..., *R_{N}*).

8. Versorgungssystem nach einem der vorhergehenden Ansprüche, **dadurch gekennzeichnet, dass** es an Bord eines Flugzeugs gebracht ist, wobei die Versorgungsnetze (12, 14; R₁, ..., R*_{N}*) jeweils von einer Gleichspannungsquelle oder von einer Kombination von Gleichspannungsquellen versorgt werden, wobei die Gleichspannungsquellen, welche die Versorgungsnetzen (12, 14; R₁, ..., R*_{N}*) versorgen, alle mit demselben Massepotential verbunden sind.

9. Versorgungssystem nach einem der vorhergehenden Ansprüche, **dadurch gekennzeichnet, dass** es am Eingang mit genau zwei Versorgungsnetzen (12, 14) verbunden ist, wobei N dann gleich 2 ist.

## Claims

1. A continuous power supply system suitable for delivering an output voltage (Vout) and suitable for input connection to N distinct continuous power supply networks (12, 14 ; R₁ , ..., R*_{N}*) that are connected to a single ground potential, N being an integer greater than or equal to 2, the power supply networks (12, 14 ; R₁, ..., R*_{N}*) each providing input voltage (V1, V2 ; V₁,..., V*_{N}*), of the type including:
- means (16) for switching/selecting one of the power supply networks (12, 14 ; R₁ ..., R*_{N}*),
- means (18) for regulating the output voltage (Vout) from input voltages (V1, V2 ; V₁,..., *V_{N}*) delivered by the power supply networks (12, 14 ; R₁, ..., R*_{N}*), and
- a control unit (20) for controlling the switching/selecting means (16) of one of the power supply networks (12, 14 ; R₁ ..., R*_{N}*) and the means (18) for regulating the output voltage (Vout),
**characterized in that** the means (18) for regulating the output voltage (Vout) comprise N distinct buck/boost converters with shared inductance (22, 24; C₁ ..., C*_{N}*), a given buck/boost voltage converter with shared inductance (22, 24 ; C₁, ..., C*_{N}*) being dedicated to each power supply network (12, 14 ; R₁, ..., R*_{N}*) to regulate the output voltage of the power supply system (10) from the input voltage (V1, V2 ; V₁, ..., V*_{N}*) delivered by the corresponding power supply network (12, 14 ; R₁, ..., R*_{N}*).

2. The power supply system according to claim 1, **characterized in that** the means for switching/selecting one of the power supply networks (12, 14 ; R₁, ..., R*_{N}*) comprise N switching units with controllable semiconductors (M1, M2 ; M_{1,1}, ..., M_{*N*,1}) and N unidirectional diodes (D1, D2; D_{1,1}, ..., D_{*N*,1}), a given switching unit with controllable semiconductors (M1, M2 ; M_{1,1}, ..., M_{*N*,1}) and a given unidirectional diode (D1, D2 ; D_{1,1}, ..., D_{*N*,1}), being associated with the selection of a given power supply network (12, 14 ; R₁, ..., *R_{N}*).

3. The power supply system according to claim 2, **characterized in that** the unidirectional diodes (D1, D2 ; D_{1,1}, ..., D_{*N*,1}) are respectively arranged between the output of the buck/boost voltage converter with shared inductance (22, 24 ; C₁, ..., C*_{N}*) dedicated to the power supply network (12, 14; R₁, ..., R*_{N}*) with the selection of which the unidirectional diodes (D1, D2 ; D_{1,1}, ..., D_{*N,*1}) are respectively associated, and the output of the power supply system (10), such that said switching/selection of one of the power supply networks (12, 14 ; R₁, ..., R*_{N}*) is secured, i.e., energy exchanges between the power supply networks (12, 14 ; R₁, ..., R*_{N}*) are avoided.

4. The power supply system according to claim 2 or 3, **characterized in that** each buck/boost voltage converter with shared inductance (22, 24 ; C₁ ..., C*_{N}*) comprises two switching units with controllable semiconductors (M1, M3, M2, M4 ; M_{1,1}, M_{1,2}, ..., M_{*N,*1}, M *_{N2}*) and two unidirectional diodes (D1, D3, D2, D4 ; D_{1,1}, D_{1,2} ..., D_{*N*,1}, D_{*N,*1}), the switching units with controllable semiconductors (M1, M2 ; M_{1,1}, ..., M_{*N*,1}) and the diodes (D1, D2 ; D _{1,1}, ..., D_{*N*,1}) of the switching/selection means (16) being one of the switching units with controllable semiconductors and one of the unidirectional diodes of the buck/boost voltage converter with shared inductance (22, 24; C₁ ..., C*_{N}*) dedicated to the power supply network (12, 14; R₁, ..., R*_{N}*) with the selection of which said switching units with controllable semiconductors (M1, M2 ; M_{1,1}, ..., M_{*N*,1}) and said diodes (D1, D2 ; D_{1,1}, ..., D _{*N*,1}) are respectively associated.

5. The power supply system according to any one of the preceding claims, **characterized in that** the control unit (20) is designed to control the opening or closing of the switching units with semiconductors (M1, M2 ; M_{1,1}, ..., M_{*N*,1}) of the switching/selection means (16) independently of the input voltages (V1, V2 ; V₁, ..., V*_{N}*) delivered by the power supply networks (12, 14 ; R₁, ..., R*_{N}*).

6. The power supply system according to any one of the preceding claims, **characterized in that** the control unit (20) comprises a monitoring module (26) designed to diagnose the unidirectionality of the unidirectional diodes (D1, D2 ; D_{1,1}, ..., D_{*N,*1}) of the switching/selection means of one of the power supply networks (12, 14 ; R₁, ..., R*_{N}*) from the output voltage (Vout) of the power supply system (10).

7. The power supply system according to claim 6, **characterized in that** the monitoring module (26) simultaneously diagnoses the unidirectionality of the diodes (D1, D2 ; D_{1,1} D_{*N,*1}), independently of the selected power supply network (12, 14 ; R₁, ..., R*_{N}*).

8. The power supply system according to any one of the preceding claims, **characterized in that** it is onboard an aircraft, the power supply networks (12, 14 ; R₁, ..., R*_{N}* ) being powered, respectively, by a continuous voltage source or by a combination of continuous voltage sources, the continuous voltage sources powering the power supply networks (12, 14 ; R₁ ..., R*_{N}*) all being connected to a single ground potential.

9. The power supply system according to any one of the preceding claims, **characterized in that** it is connected as input to exactly two power supply networks (12, 14), N then being equal to 2.
